# EUROPEAN PATENT APPLICATION

(11) **EP 3 406 128 A1**
(43) Date of publication of application: **28.11.2018**
(21) Application number: 16886306.6
(22) Date of filing: 20.01.2016
(51) Int. Cl.: A01D 34/76, A01D 34/64

(54) **MOWER AND WORKING VEHICLE WITH MOWER**

(71) Applicant: Yanmar Co., Ltd., Osaka-shi, Osaka 530-8311 (JP)
(72) Inventor: IIDA Tetsuya, Osaka-shi Osaka 530-8311 (JP)
(74) Representative: Jostarndt Patentanwalts-AG
(86) International application number: PCT/JP2016/051618
(87) International publication number: WO 2017/126064

(57) **Abstract**

The present invention addresses the problem of providing: a mower to which a belt can be easily mounted and demounted; and a working vehicle provided with the mower. A mower is provided with: a mower deck for accommodating a plurality of cutting blades; cutting blade shafts for respectively supporting the cutting blades; driven pulleys affixed to the cutting blade shafts; a gear box supported on the upper surface of the mower deck and reducing the speed of power transmitted from an engine; a drive pulley affixed to the output shaft of the gear box; and a belt wound around the drive pulley and the driven pulley. The gear box is configured so as to be capable of pivoting upward about the side of the drive pulley, around which the belt is wound.

## Description

### Technical Field

The present invention relates to a mower and a work vehicle including the mower.

### Background Art

Patent Literature 1 (PTL 1) discloses a lawn mower in which an arch-shaped bracket is fixed with bolts to a mower deck extending over cutting blades and a gearbox is fixed onto the bracket. The lawn mower has a configuration in which cutting blade shafts are vertically supported by the mower deck with a bearing, pulleys are fixed to the upper ends of the cutting blade shafts, the cutting blades are fixed to the lower ends of the cutting blade shafts in the mower deck, a tension pulley is disposed on the mower deck, and a belt is wound around the pulley, the tension pulley, and an output pulley so that a driving force from an engine is transferred to the cutting blade shafts through the output pulley.

### Citation List

### Patent Literature

PTL 1: Japanese Unexamined Utility Model Application Publication No. H5-9227 (1993)

### Summary of Invention

### Technical Problem

In the mower (lawn mower) having the configuration described above, in detaching the belt from the pulley, the tension pulley, and the output pulley, the belt has to be detached after the bracket is unbolted, and this takes time and effort in some cases. In attaching the belt to the pulley, the tension pulley, and the output pulley, it can be sometimes difficult to attach a tension arm with application of an initial tension.

In view of this, in a mower and a work vehicle including the mower according to some aspects of the present invention, it is an object to provide a mower and a work vehicle including a mower that can easily attach and detach a belt.

### Solution to Problem

A mower according to an aspect of the present invention includes: a mower deck housing a plurality of cutting blades; cutting blade shafts individually supporting the cutting blades; a driven pulley fixed to the cutting blade shafts; a gearbox supported on an upper surface of the mower deck and configured to decelerate a driving force from an engine; a driving pulley fixed to an output shaft of the gearbox; and a belt wound around the driving pulley and the driven pulley, wherein the gearbox is pivotable upward about an end of the driving pulley around which the belt is wound.

The end of the mower deck around which the belt of the driving pulley is wound may be provided with a spindle rotatably supported on a bracket, a pivotable frame that pivots about the spindle may be fixed to the gearbox, and the pivotable frame may have one end fixed to the spindle and another end fixed to a receiving part on an upper surface of the mower deck through a lock pin.

A work vehicle according to an aspect of the present invention is a work vehicle to which a lift arm is attached, the lift arm includes a pair of left and right attachment brackets, and the mower includes an attachment part attachable to the attachment bracket.

A sliding shaft may be slidably supported by the attachment bracket, and the attachment part may include an engagement member engageable with a front end of the attachment bracket, and a frame disposed to a rear portion of the attachment bracket and having a locking hole in which the sliding shaft is allowed to be inserted.

The attachment bracket may have a front portion provided with a shaft, and the attachment part may include an engagement member engageable with the shaft and a locking pin capable of being locked in a locking hole disposed in an intermediate portion of the attachment bracket.

The lift arm may include a hydraulic cylinder slidably supported between the pair of left and right attachment brackets, an engagement piece may be disposed at each end of the hydraulic cylinder, and the attachment part may include an engagement member engageable with the engagement piece.

The mower further may include a pulley cover configured to protect the driven pulley, and the attachment part may be disposed to the pulley cover.

### Advantageous Effects of Invention

According to some aspects of the present invention, a belt can be easily attached and detached.

### Brief Description of Drawings

[FIG. 1] A side view illustrating a tractor to be equipped with a mower.
[FIG. 2] (a) is a side view illustrating the mower and (b) is a plan view illustrating the mower.
[FIG. 3] (a) is a side view illustrating the mower in a state where a gearbox has pivoted upward, and (b) is a plan view illustrating the mower in the state where the gearbox has pivoted upward.
[FIG. 4] (a) is a side view illustrating the gearbox that has pivoted upward, (b) is a side view illustrating the gearbox that is pivoting downward from above, and (c) is a side view illustrating the gearbox that has pivoted downward.
[FIG. 5] A side view illustrating the tractor including lift arms to which the mower is to be attached.
[FIG. 6] (a) is a side view illustrating the mower to be attached to attachment brackets, and (b) is a plan view illustrating the mower to be attached to the attachment brackets.
[FIG. 7] (a) is a side view illustrating a mower according to a second embodiment to be attached to attachment brackets according to the second embodiment, and (b) is a plan view illustrating the mower according to the second embodiment to be attached to the attachment brackets according to the second embodiment.
[FIG. 8] (a) is a side view illustrating a mower according to a third embodiment to be attached to attachment brackets according to the third embodiment, and (b) is a plan view illustrating the mower according to the third embodiment to be attached to the attachment brackets according to the third embodiment.

### Description of Embodiments

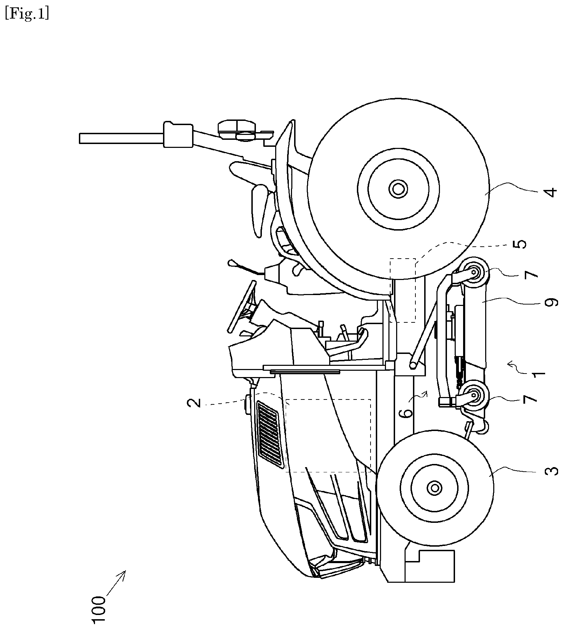

An overall configuration of a work vehicle equipped with a mower 1 will be described hereinafter. The mower 1 is configured to enable reaping when attached to a work vehicle (e.g., a tractor) as a vehicle body. With reference to FIG. 1, the mower 1 will be described using a tractor 100 as an example of the work vehicle. In this embodiment, a forward-traveling direction of the tractor 100 is defined as front, and a rearward-traveling direction is defined as rear.

The tractor 100 travels by driving front wheels 3 and rear wheels 4 by a driving force from an engine 2. The driving force from the engine 2 is transferred to the front wheels 3 and the rear wheels 4 by way of a transmission case 5 housing a transmission.

As illustrated in FIG. 1, the mower (mid-mount mower) 1 is disposed in space under the belly of the vehicle body between the front wheels 3 and the rear wheels 4. The mower 1 hangs from the vehicle body to be movable up and down by an elevation link mechanism 6. A plurality of guide rings 7, 7, 7, and 7 are provided in a lower portion of the mower 1 so that the mower 1 can also be supported from below during work.

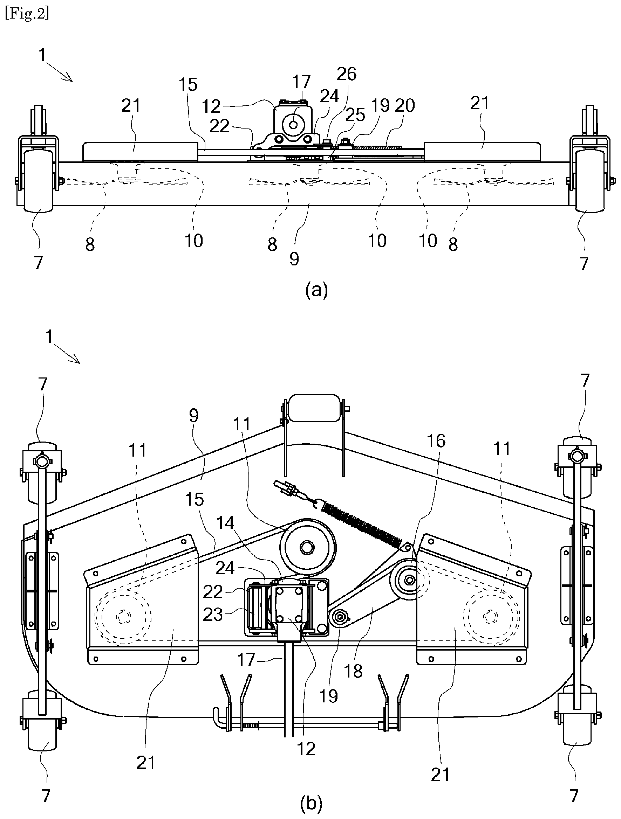

With reference to FIGs. 1 and 2, the mower 1 will be described.

The mower 1 is configured to enable reaping by rotating cutting blades 8. In this embodiment, three cutting blades 8 are provided. The mower 1 includes: a mower deck 9 housing the cutting blades 8; cutting blade shafts 10 individually supporting the cutting blades 8; driven pulleys 11 fixed to the cutting blade shafts 10; the gearbox 12 housing a gear mechanism for decelerating a driving force from the engine 2; a driving pulley 14 fixed to an output shaft 13 of the gearbox 12; a belt 15 wound around the driving pulley 14 and the driven pulleys 11, 11, and 11 to transfer the driving force; and a tension pulley 16 wound around the belt 15 to adjust a tension of the belt 15.

The mower deck 9 is substantially a pentagon in plan view, and has a box shape that is open at the bottom. The guide rings 7, 7, 7, and 7 are disposed at both sides of a front portion and a rear portion of the mower deck 9. The mower deck 9 houses the plurality of cutting blades 8 arranged in the vehicle width direction (lateral direction). The plurality of cutting blades 8 are arranged in the vehicle width direction and are shifted from one another in the longitudinal direction (front-rear direction). In this embodiment, the rotation center of each of the driven pulleys 11 (cutting blades 8) is at a vertex of substantially a triangular shape formed by the driven pulleys 11 in plan view. The driven pulleys 11 are arranged at the lateral center (the center in the left-right direction) of a front portion of the mower deck 9 and both sides of a rear portion of the mower deck 9.

The driven pulleys 11 are disposed above the cutting blades 8 and on the upper surface of the mower deck 9. The cutting blade shafts 10 are rotatably supported by the mower deck 9 and penetrate the mower deck 9 from the upper surface toward the inside of the mower deck 9. The driven pulleys 11 are individually fixed to the upper ends of the cutting blade shafts 10, and the cutting blades 8 are fixed to the lower ends of the cutting blade shafts 10. That is, the driven pulleys 11 are rotatably supported on the upper surface of the mower deck 9.

The driving pulley 14 is rotatably supported on the upper surface of the mower deck 9. The driving pulley 14 is disposed within an area surrounded by the driven pulleys 11 arranged at the vertexes of the substantially triangular shape in plan view. The driving pulley 14 are arranged behind the driven pulleys 11 disposed in the lateral center of the front portion and are shifted from the center in the vehicle width direction (e.g., to the left in this embodiment).

The driving pulley 14 is fixed to the lower end of the output shaft 13 extending downward from the gearbox 12 disposed above the driving pulley 14. The lower end of the output shaft 13 does not penetrate the mower deck 9 and is located above the mower deck 9. The gearbox 12 is supported on the upper surface of the mower deck 9. The gearbox 12 is configured such that a driving force from the engine 2 is transferred to the gearbox 12 through an input shaft 17 and is transferred to the driving pulley 14 through the output shaft 13.

The tension pulley 16 is rotatably supported on the upper surface of the mower deck 9 through a tension arm 18. The tension pulley 16 is disposed to the rear right of the driven pulley 11 at the lateral center of the front portion of the mower deck 9 and to the left front of the driven pulley 11 at the right of the mower deck 9 so as to enable contact with the belt 15 wound around the driven pulley 11 at the lateral center of the front portion of the mower deck 9 and the driven pulley 11 at the right of the mower deck 9.

The tension arm 18 is a plate member and is configured to be rotatable about a spindle 19 disposed at one end of the tension arm 18. The spindle 19 is located at the right of the driving pulley 14. The spindle 19 penetrates the upper surface of the mower deck 9 and is rotatably supported by the mower deck 9. One end of the tension arm 18 is fixed to the spindle 19 so that the other end of the tension arm 18 is rotatable.

The width of the tension arm 18 increases from one end provided with the spindle 19 toward the other end in plan view. The enlarged end of the tension arm 18 is provided with the tension pulley 16 at a side toward the driven pulley 11 at the right of the mower deck 9 and is provided with a locking portion 20a of an elastic member 20 for applying a biasing force at a side toward the driven pulley 11 at the lateral center of the front portion of the mower deck 9. An end of the elastic member 20 is attached to the locking portion 20a and the other end of the elastic member 20a is attached to a predetermined place of the upper surface of the mower deck 9 so that the tension arm 18 can pivot about the spindle 19 toward the driven pulley 11 at the lateral center of the front portion of the mower deck 9. A biasing force is exerted by the elastic member 20 to cause the tension arm 18 to pivot toward the driven pulley 11 at the lateral center of the front portion of the mower deck 9 so that the tension of the belt 15 can be adjusted.

In the configuration described above, the belt 15 is wound around the outer peripheries of the driven pulleys 11, and then wound around the outer peripheries from a portion between the driven pulley 11 at the lateral center of the front portion of the mower deck 9 and the driven pulley 11 at the right of the mower deck 9 to the driving pulley 14 and then the tension pulley 16. As described above, by winding the belt 15, the belt 15 is wound by approximately 180 degrees or more around the outer peripheries of the driven pulleys 11 and the driving pulley 14. Consequently, a driving force can be efficiently transferred.

The driven pulley 11 at the left of the mower deck 9 and a part of the belt 15 wound around this driven pulley 11 are covered and protected with a pulley cover 21 projecting from a left portion of the upper surface of the mower deck 9. Similarly, the driven pulley 11 at the right of the mower deck 9 and a part of the belt 15 wound around this driven pulley 11 are covered and protected with a pulley cover 21 projecting from a right portion of the upper surface of the mower deck 9. In this embodiment, a part of the tension pulley 16 is covered with the pulley cover 21 projecting from the right portion of the upper surface of the mower deck 9.

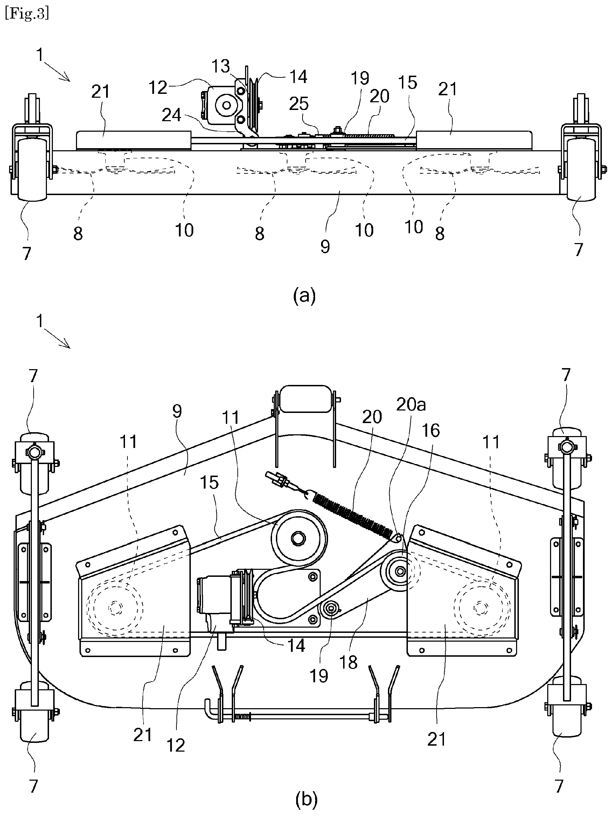

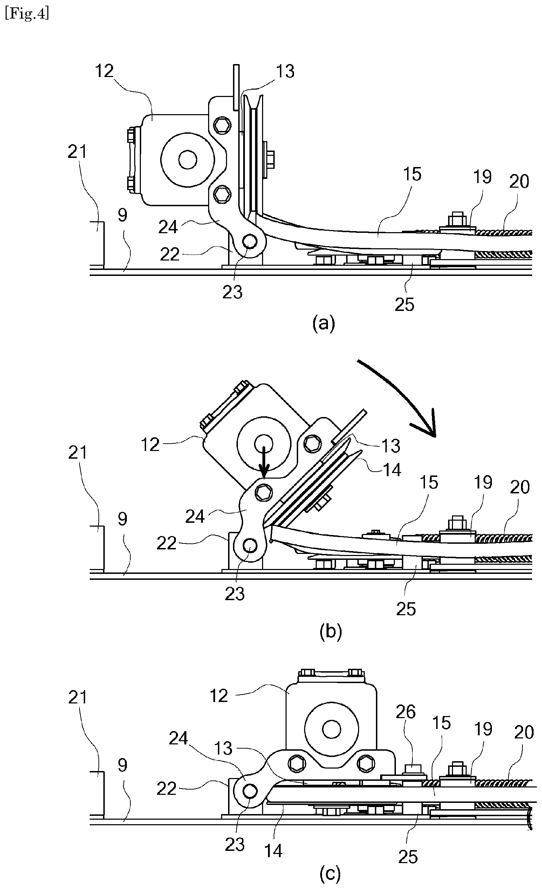

As illustrated in FIGs. 3 and 4, the gearbox 12 is configured to be pivotable upward about an end of the driving pulley 14 around which the belt 15 is wound.

The driving pulley 14 is fixed to the output shaft 13 of the gearbox 12. A bracket 22 projects from the upper surface of the mower deck 9 at the end of the driving pulley 14 around which the belt 15 is wound. A spindle 23 is rotatably supported by the bracket 22. A pivotable frame 24 that pivots about the spindle 23 is fixed to the gearbox 12.

The pivotable frame 24 is formed as a substantially rectangular frame member surrounding the gearbox 12 in plan view. The pivotable frame 24 is fastened to the front surface and the rear surface of the gearbox 12 with fasteners such as bolts. An end of the pivotable frame 24 is fixed to the spindle 23. The other end of the pivotable frame 24 is fixed to a receiving part 25 on the upper surface of the gearbox 12 through a lock pin 26. The receiving part 25 projects from the upper surface of the gearbox 24, has a cylindrical shape, and has a locking hole formed from the upper surface of the receiving part 25 toward the inside and used for locking the lock pin 26.

As described above, the pivotable frame 24 is attached to the gearbox 12 and is fixed to the spindle 23. Accordingly, the gearbox 12 can pivot upward about the end of the driving pulley 14 around which the belt 15 is wound.

With reference to FIG. 4, attachment of the belt 15 to the driving pulley 14 will be described. In FIG. 4, the belt 15 is wound around the driven pulleys 11 and the tension pulley 16, and a biasing force is exerted on the tension arm 18 by the elastic member 20.

In the state illustrated in FIG. 4(a), that is, in the state where the gearbox 12 is pivoted upward, the belt 15 is hooked on the lower end of the driving pulley 14 (the end around which the belt 15 is wound) fixed to the gearbox 12. When the gearbox 12 gradually pivots downward, a state illustrated in FIG. 4(b) is established. In this state, a downward force tends to be exerted on gearbox 12 using the spindle 23 as a fulcrum, by the self-weight on the gearbox 12. Accordingly, even in the state where an initial tension is exerted on the belt 15, the gearbox 12 can easily pivot downward. The initial tension here is a tension exerted on the belt 15 in the state where the belt 15 is wound around the driven pulleys 11, the tension pulley 16, and the driving pulley 14 and the state where a biasing force is exerted on the tension arm 18 by the elastic member 20. When the gearbox 12 has pivoted downward, the belt 15 is wound around the driving pulley 14 (see FIG. 4(c)).

As described above, the gearbox 12 is configured to be pivotable upward about the end of the driving pulley 14 around which the belt 15 is wound. Thus, even in the state where the initial tension is exerted on the belt 15, the belt 15 can be easily wounded.

A procedure of detaching the belt 15 from the driving pulley 14 will be described.

The elastic member 20 is detached from the locking portion 20a of the tension arm 18 so that the tension arm 18 thereby pivots, and the belt 15 is loosened. By detaching the pivotable frame 24 from the receiving part 25 to cause the gearbox 12 to pivot upward, the belt 15 is detached from the driving pulley 14.

As described above, the gearbox 12 is configured to be pivotable upward about the end of the driving pulley 14 around which the belt 15 is wound so that the belt 15 can be easily attached and detached to/from the driving pulley 14. Thus, replacement and maintenance, for example, of the belt 15 can be easily performed.

In addition, the lock pin 26 enables the pivotable frame 24 of the gearbox 12 to be fixed to the receiving part 25 so that the belt 15 can be easily attached and detached to/from the driving pulley 14 without using a tool. Accordingly, replacement and maintenance, for example, of the belt 15 can be more easily performed.

The driving pulley 14 is disposed within the area surrounded by the driven pulleys 11 arranged at the vertexes of the substantially triangular shape in plan view. Thus, the amount of winding of the belt 15 around the driving pulley 14 can be increased so that the belt 15 can be stably attached and detached to/from the driving pulley 14.

In this embodiment, the pivotable frame 24 of the gearbox 12 is fixed to the receiving part 25 through the lock pin 26. The present invention, however, is not limited to this example. For example, the pivotable frame 24 may be fixed to the receiving part 25 with fasteners such as bolts.

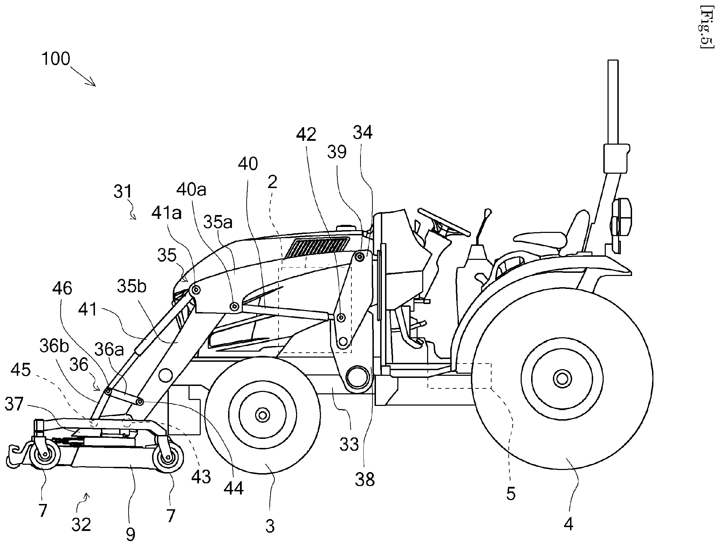

A work vehicle having an attachment to be attached to lift arms 31 will now be described. With reference to FIG. 5, a work vehicle (e.g., the tractor 100) to which the mower 32 as an attachment is attached will be described.

The tractor 100 can move the lift arm 31 upward and downward by supply of hydraulic oil pumped by a hydraulic pump (not shown) driven by a driving force from the engine 2 to the lift arms 31 to be attached to a vehicle body frame 33.

The lift arms 31 are detachably attached to the tractor 100. The lift arms 31 are constituted by a pair of left and right masts 34 detachably attached to the vehicle body frame 33 of the tractor 100, a pair of left and right arms 35 connected to the masts 34 to be pivotable upward and downward, a pair of left and right attachment links 36, and a pair of left and right attachment brackets 37.

Left and right loader mounts 38 as a pair are respectively fixed to left and right side plates of the vehicle body frame 33. The pair of left and right masts 34 is detachably attached to the pairs of left and right loader mounts 38.

Each of the arms 35 is constituted by a rear arm 35a attached to the corresponding mast 34 and a front arm 35b attached to the attachment. The rear end of the rear arm 35a is attached to the upper end of the corresponding mast 34 through a spindle 39 whose longitudinal direction coincides with the vehicle width direction so that the arm 35 is pivotable upward and downward about the spindle 39.

The width of the rear arm 35a gradually increases from the rear end toward the front end in side view. A lower portion of the enlarged front end portion of the rear arm 35a is provided with an arm cylinder bracket part 40a to which an end of an arm cylinder 40 is attached. An upper portion of the enlarged front end portion of the rear arm 35a is provided with an attachment cylinder bracket portion 41a to which an end of an attachment cylinder 41 is attached.

A vertically intermediate portion (an intermediate portion in the up-bottom direction) of the mast 34 supports the other end of the arm cylinder 40 (the front end of a piston rod) through a spindle 42 whose longitudinal direction coincides with the vehicle width direction. The piston rods of the pair of left and right arm cylinders 40 extend and contract at the same time so that the vertical pivot angle of the lift arms 31, that is, the angle of the pair of left and right lift arms 31 relative to the mast 34, is thereby adjusted.

The front ends of the front arms 35b are attached to the attachment through the attachment brackets 37. The attachment brackets 37 support the front ends of the front arms 35b through spindles 43 whose longitudinal direction coincides with the vehicle width direction. Accordingly, the attachment brackets 37 and the attachment are pivotable upward and downward (i.e., vertically) relative to the pair of left and right arms 35 through the spindles 43. In this embodiment, the mower 32 is used as the attachment. However, the attachment is not limited to an attachment for drilling, and another attachment may be attached.

Each of the attachment links 36 is constituted by an arm-side link member 36a and an attachment-side link member 36b. The lower end of the arm-side link member 36a is supported by a longitudinally intermediate portion of the front arm 35b through a spindle 44 whose longitudinal direction coincides with the vehicle width direction. The lower end of the attachment-side link member 36b is supported by an upper portion of the attachment bracket 37 through a spindle 45 whose longitudinal direction coincides with the vehicle width direction.

The arm-side link member 36a and the upper end of the attachment-side link member 36b are attached to a spindle 46 whose longitudinal direction coincides with the vehicle width direction. The front end of the piston rod of the attachment cylinder 41 is attached to the spindle 46. In the attachment cylinder 41, a bend angle of the attachment link 36, that is, the angle formed by the arm-side link member 36a and the attachment-side link member 36b, is adjusted, and a longitudinal pivot angle of the attachment bracket 37 with respect to the arm 35 is adjusted.

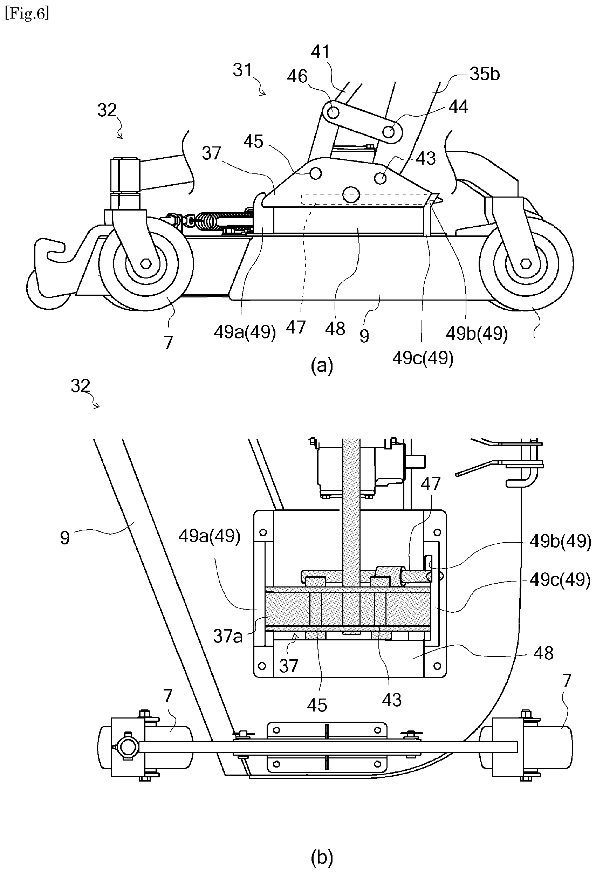

With reference to FIG. 6, a method for attaching the mower 32 to the attachment brackets 37 will be described. The shaded portion in FIG. 6 represents a member disposed toward the attachment brackets 37.

In each of the attachment brackets 37, two plate members are arranged laterally with a predetermined interval and are integrated by a coupling frame 37a. Each of the attachment brackets 37 is formed to have its front end project in side view. A sliding shaft 47 is provided to the inner side surface of each attachment bracket 37. The sliding shaft 47 is slidably supported in the axial direction, and can be locked at a predetermined position.

Pulley covers 48 and 48 of the mower 32 are provided with attachment parts 49 to which the attachment brackets 37 can be respectively attached. Each of the attachment parts 49 is constituted by an engagement member 49a that is engaged with a front portion of the corresponding attachment bracket 37, and a frame 49c disposed to a rear portion of the attachment bracket 37 and having a locking hole 49b in which the sliding shaft 47 is inserted and locked.

The engagement member 49a is formed as a recess in conformity with the shape of the front end of the attachment bracket 37. The locking hole 49b is formed in the frame 49c provided in close contact with the rear surface of the pulley cover 48, and is located behind the sliding shaft 47.

In the configuration described above, after the front end of the attachment bracket 37 is engaged with the engagement member 49a, a rear portion of the attachment bracket 37 is placed on the upper surface of the pulley cover 48, and the sliding shaft 47 is inserted and locked in the locking hole 49b. In this manner, the mower 32 can be fixed to the attachment brackets 37.

As described above, the attachment (the mower 32 in this embodiment) different from a drilling attachment such as a bucket is provided with the attachment parts 49 capable of being attached to the attachment brackets 37 of the lift arms 31 so that various types of attachments can be easily pivoted using the arm cylinders 40 and the attachment cylinders 41. In the mower 32, the heavy mower deck 9 needs to be lifted or flipped in maintenance. Since the mower 32 can be attached to the lift arms 31, the mower 32 can be lifted and flipped. As a result, maintainability (e.g., efficiency in replacement of cutting blades 8) can be enhanced.

In addition, since the mower 32 can be fixed to the lift arms 31 unintended detachment of the mower 32 form the lift arms 31 does not occur so that maintenance work can be performed with sufficient safety.

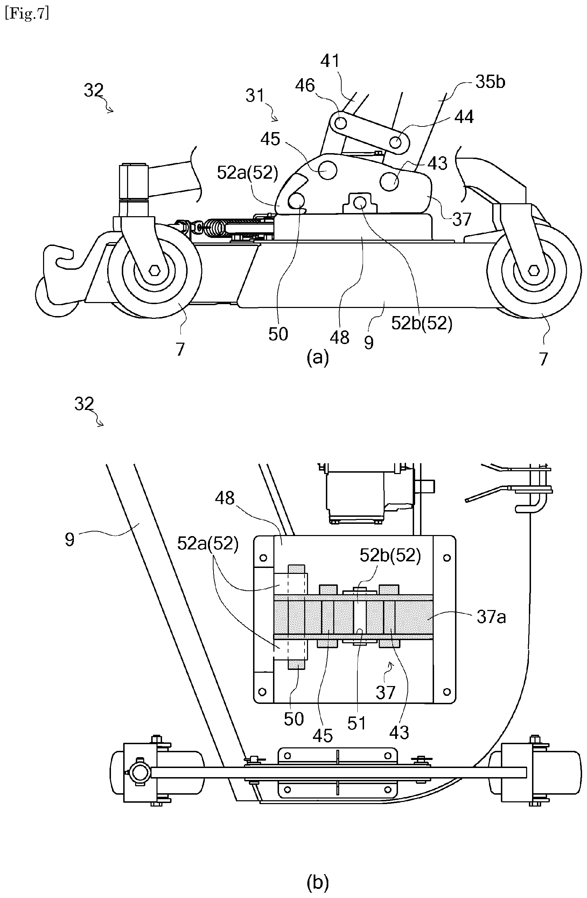

A method for attaching the mower 32 to the attachment brackets 37 according to a second embodiment will be described with reference to FIG. 7. In FIG. 7, the shaded portion represents a member provided to the attachment brackets 37.

In each of the attachment brackets 37, two plate members are arranged laterally with a predetermined interval and are integrated by the coupling frame 37a. A front portion of each of the attachment brackets 37 is provided with a shaft 50 penetrating a side surface of the plate member. A center portion of the side surface of each attachment bracket 37 has a locking hole 51

The pulley covers 48 of the mower 32 are provided with attachment parts 52 to which the attachment brackets 37 can be respectively attached. Each of the attachment parts 52 is constituted by an engagement member 52a that is engaged with the shaft 50 of the corresponding attachment bracket 37 and a locking pin 52b that can be engaged with the locking hole 51 of the attachment bracket 37.

In the configuration described above, the shafts 50 of the attachment brackets 37 are engaged with the engagement members 52a of the mower 32 and then the locking pins 52b of the mower 32 are locked in the locking holes 51 of the attachment brackets 37 so that the mower 32 can be thereby fixed to the attachment brackets 37.

In the manner described above, the attachment (the mower 32 in this embodiment) different from a drilling attachment such as a bucket is provided with the attachment parts 52 to which the lift arms 31 can be provided. Thus, advantages similar to those of the above embodiment can be obtained.

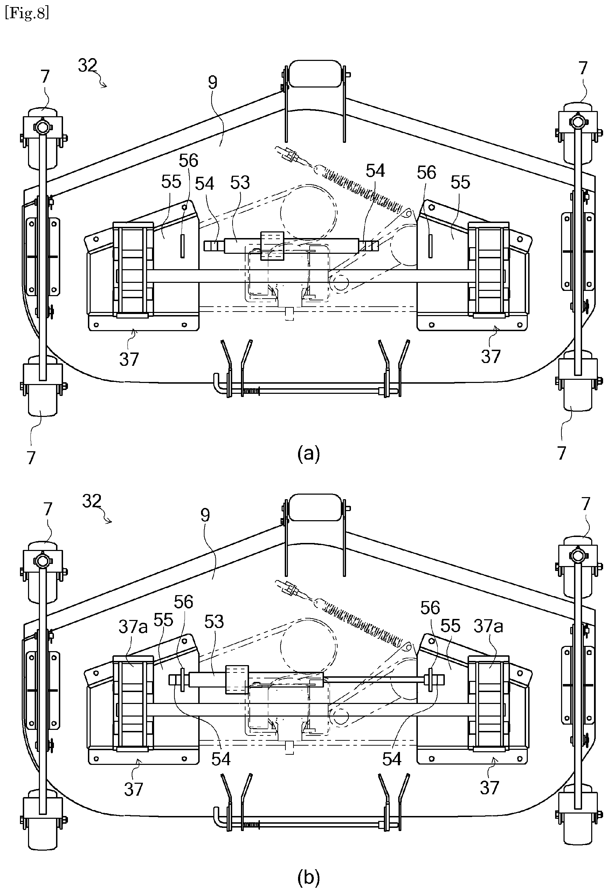

A method for attaching the mower 32 to the attachment brackets 37 according to a third embodiment will now be described with reference to FIG. 8.

In each of the attachment brackets 37, two plate members are arranged laterally with a predetermined interval and are integrated by the coupling frame 37a. An electric hydraulic cylinder 53 whose axial direction coincides with the lateral direction is disposed between the attachment brackets 37. The hydraulic cylinder 53 is axially slidably supported by the lift arms 31. Engagement pieces 54 are disposed at both ends of the hydraulic cylinder 53. The engagement pieces 54 are configured to reach pulley covers 55 of the attachment brackets 37 by extension and contraction of the hydraulic cylinder 53. Each of the engagement pieces 54 is formed by bending one plate member twice.

The pulley covers 55 of the mower 32 are provided with, as attachment parts to which the attachment brackets 37 can be attached, engagement members 56 that can reach the engagement pieces 54 by extension and contraction of the hydraulic cylinder 53 to be engaged with the engagement pieces 54. The engagement members 56 project from the upper surfaces of the pulley covers 55 in arch shapes so as to be engaged with the engagement pieces 54.

In the configuration described above, operation of the hydraulic cylinder 53 causes a rod to extend and contract so that the engagement pieces 54 reach predetermined positions of the pulley covers 55 where the engagement members 56 are located, and the engagement pieces 54 are engaged with the engagement members 56. Accordingly, the mower 32 can be fixed to the attachment brackets 37.

In the manner described above, the attachment (the mower 32 in this embodiment) different from a drilling attachment such as a bucket is provided with the attachment parts to which the lift arms 31 can be attached. Thus, advantages similar to those of the above embodiment can be obtained.

### Industrial Applicability

The present invention is applicable to a mower and a work vehicle including the mower.

### Reference Signs List

- 1: mower
- 2: engine
- 8: cutting blade
- 9: mower deck
- 10: cutting blade shaft
- 11: driven pulley
- 12: gearbox
- 13: output shaft
- 14: driving pulley
- 15: belt
- 16: tension pulley
- 22: bracket
- 23: spindle
- 24: pivotable frame
- 25: receiving part
- 26: lock pin
- 31: lift arm
- 32: mower
- 37: attachment bracket
- 47: sliding shaft
- 48: pulley cover
- 49: attachment parts
- 49a: engagement member
- 49b: locking hole
- 49c: frame
- 50: shaft
- 51: locking hole
- 52: attachment part
- 52a: engagement member
- 52b: locking pin
- 53: hydraulic cylinder
- 54: engagement piece
- 55: pulley cover
- 56: engagement member
- 100: tractor

## Claims

1. A mower comprising;
a mower deck housing a plurality of cutting blades;
cutting blade shafts individually supporting the cutting blades;
a driven pulley fixed to the cutting blade shafts;
a gearbox supported on an upper surface of the mower deck and configured to decelerate a driving force from an engine;
a driving pulley fixed to an output shaft of the gearbox; and
a belt wound around the driving pulley and the driven pulley, wherein
the gearbox is pivotable upward about an end of the driving pulley around which the belt is wound.

2. The mower according to claim 1, wherein
the end of the mower deck around which the belt of the driving pulley is wound is provided with a spindle rotatably supported on a bracket,
a pivotable frame that pivots about the spindle is fixed to the gearbox, and
the pivotable frame has one end fixed to the spindle and another end fixed to a receiving part on an upper surface of the mower deck through a lock pin.

3. A work vehicle to which a lift arm is attached, wherein
the lift arm includes a pair of left and right attachment brackets, and
the mower according to claim 1 or 2 includes an attachment part attachable to the attachment bracket.

4. The work vehicle according to claim 3, wherein
a sliding shaft is slidably supported by the attachment bracket, and
the attachment part includes an engagement member engageable with a front end of the attachment bracket, and a frame disposed to a rear portion of the attachment bracket and having a locking hole in which the sliding shaft is allowed to be inserted.

5. The work vehicle according to claim 3, wherein
the attachment bracket has a front portion provided with a shaft, and
the attachment part includes an engagement member engageable with the shaft and a locking pin capable of being locked in a locking hole disposed in an intermediate portion of the attachment bracket.

6. The work vehicle according to claim 3, wherein
the lift arm includes a hydraulic cylinder slidably supported between the pair of left and right attachment brackets,
an engagement piece is disposed at each end of the hydraulic cylinder, and the attachment part includes an engagement member engageable with the engagement piece.

7. The work vehicle according to any one of claims 3 to 6, wherein
the mower further includes a pulley cover configured to protect the driven pulley, and
the attachment part is disposed to the pulley cover.
